(19) Europäisches Patentamt
European Patent Office
Office européen des brevets

(11) Publication number: **0 228 346 A2**

(12) **EUROPEAN PATENT APPLICATION**

(21) Application number: **86810547.9**

(22) Date of filing: **26.11.86**

(51) Int. Cl.⁴: **C 04 B 28/02**, C 04 B 22/02 // (C04B28/ 02, 22:02, 22:14, 24:00, 24:02)

(30) Priority: **26.11.85 CH 5034/85**

(43) Date of publication of application: **08.07.87 Bulletin 87/28**

(84) Designated Contracting States: **AT BE DE FR GB IT LU NL SE**

(71) Applicant: **Lakomik in Regina, Dobroslava, Via del Pioppi 3, CH-6616 Losone (CH)**

(72) Inventor: **The inventor has agreed to waive his entitlement to designation**

(74) Representative: **Pozzoli, Giuliano, c/o ENGIMPEX S.A. Engineering Consultants & Industrial Management P.O. Box 18, CH-6902 Lugano-Paradiso (CH)**

(54) **Catalyst activating the setting of water and air-hardening limes,particularly of cements,limes and mortars and its production process.**

(57) The catalyst activates the setting of cements, limes and plasters and consists of colloidal sulphur in a quantity of at least 83%, sodium thiocyanate at least 0.2%, sodium thiosulphate at least 0.2%, phenol at least 0.1%, benzene not exceeding 0.3% and naphthalene not exceeding 0.4%.

The method for producing this catalyst consists of the direct oxidation of hydrogen sulphide containing added naphthalene, ammonia, hydrogen cyanide and aromatic hydrocarbons in the presence of catalyst in the form of hydroquinone and sodium carbonate, which disperses the elemental sulphur formed down to the colloidal level.

The result of the action of the catalyst according to the invention is a limitation of excess mixing water, fluidization and plasticization of the concrete mass and imparting of thixotropic properties thereto. Moreover it contributes to increase the mechanical strength of the concrete, its impermeability, and to improve the corrosion resistance after the cement hydration period.

EP 0 228 346 A2

Catalyst activating the setting of water and air-hardening limes, particularly of cements, limes and mortars and its production process.

The invention relates to a catalyst activating the setting of cements and mortars and a process for its preparation.

The use of additives in concretes and in cement mixes has long been known in building practice.

The action of additives in cement-based materials, especially in concretes, consists in accelerating the setting of cement, increasing the mechanical strength during the first stage of setting, impermeabilizing and plasticizing the concretes, aerating the concrete mass and in similar properties.

However some additives produce hydrophobicity and are and are added to the concrete mass mixed with water or in the form of insoluble compounds; use is also made of additives which reduce the corrosion of the concrete when the casting is made in a hostile environment.

The concrete additives are generally single- or multicomponent commercial preparations, which include: calcium chloride, lignosulphonates, sulphonates, nitrites, hydroxides, silicates, phtalates, aluminium, surface-active compounds and so on.

In general, concrete additives act in the mass as electrolytes and agents which react with cement, the result of the reaction being the formation of poorly soluble or weakly dissociated complexes.

At the beginning, the action of cement additives makes it possible to control the increases in strength during the first stage of cement setting, but, as a rule, they have no real permanent effect on the increase in strength after 28 days' setting.

A large number of known concrete additives reduce the final strength of concrete relative to an additive-free mass after 28 days' setting.

Moreover, the range of application of some additives relative to concrete is considerable, while its long-term action gives rise to a series of phenomena and reactions which have a detrimental effect on the quality of the concrete.

The use of baths (tanks) which saturate concrete components with liquid sulphur is also known from foreign, especially American, literature.

The action of liquid sulphur on a preformed concrete component consists in its diffusive introduction into the pores of the concrete material in order to impregnate the outer layer. In view of the physicochemical properties of liquid sulphur and of the surface of a concrete component, a preparation of this kind takes place slowly, while saturation with sulphur takes place only in the layers adjacent to the surface of concrete components.

A further disadvantage of the use of this technology is the limitation resulting from the overall size of the

concrete components. On the other hand, coating with liquid sulphur by spraying the surface of concrete does not produce satisfactory results because of the low penetration range.

Saturation of components with liquid sulphur in the course of immersion offers a number of advantages in the form of an increase in the mechanical strength of the concrete, which is due, however to the strength properties of the sulphur, which acts as an additional binder in this case.

The binding effect of sulphur is also known from the use of sulphur concretes, in which a mixture of sulphur and fillers is heated to a tamperature above 100°C and, after the mass has been formed and cooled, a sulphur concrete is obtained, with a strength depending on the quantity of sulphur which acts as a thermoplastic binder.

Surface treatment of concretes with fluorine compounds and coating materials is also known.

The use of reactive additives for the concrete gives rise chiefly to phase shifts during cement setting, without having a real effect on the kinetics of the formation of the load-bearing lattice in the concrete.

When the actual potential strength of concrete is analysed on the basis of the kinetics of cement hydration, the ultimate efficiency of the material strength is exploited to within 35-55%.

Some concrete additives, by accelerating the strength parameters of cement, cause an increase in the internal stresses in the concrete mass, especially at the binder/filler boundaries, leading to an increase in

anisotropy, thereby lowering the ultimate parameters of the strength and impermeability of the concrete.

The essence of the present invention is the development of the composition of a catalyst activating the setting of cements, limes and plasters, consisting of colloidal sulphur in a quantity of at least 83%, sodium thiocyanate at least 0.2%, sodium thiosulphate at least 0.2%, phenol at least 0.1%, benzene not exceeding 0.3% and naphtalene not exceeding 0.4%.

The process for producing a catalyst activating the binding of cements and limes consists in directly oxidizing hydrogen sulphide containing added naphthalene, ammonia, hydrogen cyanide and aromatic hydrocarbons in the presence of a catalyst in the form of hydroquinone and sodium carbonate, which disperses the elemental sulphur produced, down to a colloidal level.

The catalyst activating the setting of cements and limes acts like a thermodynamical complex in a medium consisting of cement, agglomerated mineral fillers, metal reinforcement and water, towards modular hydration of the cement, by crystallizing the energy centres introduced into the medium together with the components, and especially with the cement and the inorganic fillers.

This is particularly applicable to cement, in which, in the course of manufactura, pneumatic conveying and storage, a series of energetic and physicochemical changes take place at the surface of particles with dissimilar polarity parameters or gas occlusions take place on the granules with a preponderance of a charge with similar polarity.

The catalyst, which activates the processes and transformations occurring in cement as a concrete binder, consists of colloidal sulphur activated with sodium thiocyanate, sodium thiosulphate, phenol, benzene and naphthalene, which is preferably obtained by oxidation of a hydrogen sulphide gaseous phase containing added naphthalene, ammonia, hydrogen cyanide and monocyclic aromatic hydrocarbons adsorbed in alkaline solutions, to obtain elemental sulphur in the presence of catalyst in the form of hydroquinone and sodium carbonate.

The essence of the action of the complex which catalyses the processes of cement setting according to the present invention is a control of the crystallization nuclei and of the hydration of cement, and neutralization of energetic centres, especially on the particles of cement and inorganic fillers, which are due to the hydrophilic nature of the particles.

The action of the catalyst according to the invention has the effect of limiting the excess of mixing water, fluidization and plasticization of the concrete mass and imparting of thixotropic characteristics thereto.

Furthermore, after the cement hydration period there is a significant increase in the mechanical strength of the concrete, and in its impermeability, and an improvement in corrosion resistance.

The mechanism and the kinetics of the action of the catalyst according to the invention on the cement in the concrete during crystallization and hydration consists essentially of the treatment of the surface of the particles of cement and inorganic fillers, of the achievement of a restriction in the agglomerates of cement particles, and of the hydrophilic nature of the

binder in relation to the fillers.

The catalyst according to the invention does not take part to the chemical reactions taking place in the concrete mass and is soluble in the mixing water only to a small degree, and furthermore does not constitute an additional binding agent.

The agent also acts as a modifier and a promoter of the crystallization of the reinforcement lattice system for the axial stresses in the concrete.

In view of the good homogenization of the catalyst in the concrete mass, it becomes possible to affect approximately 75% of the reactive surface, utilizing a greater quantity of cement as a binder and limiting the quantity of unreacted binder.

The action of the complex which catalyses the processes of cement, lime or plaster setting according to the invention consists of the formation of cohesive bridges at the boundary between the cement and the inorganic fillers particles, which block localized points with avalanche (chain) growth of binder on the filler. As a result, the anisotropy of the mass is restricted, an uniform distribution of the binder in the mass is obtained, thereby producing, together with a limited excess of mixing water, an impermeable concrete with limited water-absorptivity and increased mechanical strength. These effects are achieved by virtue of exploiting the binding power of cement towards the binder and not towards the filler, via the catalysis of the processes by means of the catalyst according to the present invention. The subject of the invention is described in greater detail in the following example related to a particular form of application (nevertheless not limiting).

Example

Hydrogen sulphide with added naphthalene, ammonia, hydrogen cyanide and aromatic hydrocarbons is passed through a wash-bottle, filled with an alkaline solution consisting of hydroquinone and sodium carbonate, in which hydrogen sulphide combines with sodium carbonate to form sodium sulphate, which then combines with hydroquinone to form a compound of the hydroquinone type, while the aromatic hydrocarbons do not take part in the reaction, acting as catalyst dispersing the sulphur formed into a colloidal form.

The chemical process which takes place according to the invention is described by the following chemical reactions:

$2\ H_2S + O_2 = 2\ S + 2\ H_2O$

e

$Na_2CO_3 + HCN = NaCN + Na\ HCO_3$

$2\ NaCN + 2\ H_2S + O_2 = 2\ NaCNS + 2\ H_2O$

$2\ NaHS + 2\ O_2 = Na_2S_2O_3 + H_2O$

The standard composition of the catalyst activating the processes of hydration and crystallization of cements and limes is as follows:

colloidal sulphur - 58.9%, water - 35%, sodium thiocyanate - 2.5%, sodium thiosulphate - 2.5%, phenol 1.0%, benzene - 0.1%, naphthalene - 0.1%.

The application and the utilization of the catalyst activating the processes of setting of cements according to the invention is carried out by introducing it into the mix concrete/water in the form of a suspension, or into the cement in a quantity of 0.1 to 0.8% relative to the mass of cement, calculated as the mass of dry catalyst.

In the case where the catalyst is employed as a cement

additive, it should be introduced after it has been dried at a temperature not exceeding +70°C.

The most favourable effects are obtained by adding 0.4% of catalyst relative to cement.

The following table shows the effect of the catalyst according to the invention on the strength of the concrete after 28 days.

| | | | | | |
|---|---|---|---|---|---|
| Portland cement (kg) | 388 | 388 | 388 | 388 | 388 |
| Aggregate (kg) | 1524 | 1524 | 1524 | 1524 | 1524 |
| Sand (kg) | 290 | 290 | 290 | 290 | 290 |
| Water (kg) | 190 | 180 | 170 | 175 | 170 |
| Catalyst (kg) | - | 1.2 | 1.5 | 1.6 | 1.7 |
| $R_c$ after 28 days (MPa) | 19.73 | 36.64 | 36.21 | 30.02 | 26.93 |

Claims

1. A catalyst activating the setting of water and air-hardening limes, particularly cements, limes and mortars, characterized in that it consists of colloidal sulphur in a quantity of at least 83%, sodium thiocyanate at least 0.2%, sodium thiosulphate at least 0.2%, phenol at least 0.1%, benzene not exceeding 0.3% and naphthalene not exceeding 0.4%.

2. A process for the production of the catalyst activating the setting of cements and mortars according to the claim 1 characterized in that hydrogen sulphide containing added naphthalene, ammonia, hydrogen cyanide and aromatic hydrocarbons is oxidized directly in the presence of a catalyst in the form of hydroquinone and sodium carbonate which disperses the elemental sulphur formed down to the colloidal form.

3. Utilization of the catalyst according to the claims 1 or 2 as activator and accelerator of the setting of cements, mortars, limes, plasters, binders and so on.